# FASCICULE DE BREVET EUROPEEN

(11) **EP 0 931 441 B1**
(45) Date de publication et mention de la délivrance du brevet: **07.01.2004**
(21) Numéro de dépôt: 99400182.4
(22) Date de dépôt: 27.01.1999
(51) Int. Cl.: A01C 11/02, A01G 9/10

(54) **Installation de transplantation de plants en mottes**
Vorrichtung zum Verpflanzen von Pflanzenballen
Device for transplanting plants in soil blocks

(30) Priorité: 27.01.1998 FR 9800853
(43) Date de publication de la demande: 28.07.1999
(73) Titulaire: Gerplant Automation, 76410 Tourville la Rivière (FR)
(72) Inventeur: Germaine, Michel, 76350 Oissel (FR)
(74) Mandataire: Casalonga, Axel

(56) Documents cités:
- EP-A- 0 712 569
- FR-A- 2 693 344
- NL-C- 1 004 688
- US-A- 5 557 881

## Description

La présente invention se rapporte à une installation de transplantation de plants en mottes.

La transplantation de plants en mottes est utilisée notamment en horticulture pour repiquer par exemple des petits plants, issus de semis dans des plaques de semis à petites alvéoles, dans des plaques de croissance comportant des alvéoles plus grandes. Pour cette transplantation, il est connu d'utiliser des installations de transplantation automatiques comprenant des têtes de préhension pouvant comporter, par exemple, chacune plusieurs aiguilles convergentes qui, pour saisir un plant en motte, sont enfoncées dans la motte par un mouvement de translation suivant leurs axes (WO-A-86/01975), ou alors plusieurs lames ou aiguilles qui, pour saisir un plant en motte, sont enfoncées parallèlement les unes aux autres dans la motte et sont rapprochées les unes des autres, au moins à leurs extrémités libres, vers la fin du mouvement d'enfoncement dans la motte, pour exercer un effet de pincement sur cette dernière (EP-A-0 288 873 et EP-A-0 764 503).

Les têtes de préhension précitées présentent l'avantage, par rapport à d'autres têtes de préhension connues, qu'elles permettent de saisir des mottes dans des alvéoles, de les extraire de ces alvéoles et de les replanter de façon fiable, à cadence élevée, sans risque d'endommagement des mottes et des racines des plants, et sans utilisation de moyens additionnels, par exemple de poussoirs, tels qu'ils sont nécessaires par exemple pour dégager la motte de l'alvéole dans le cas des têtes de préhension comprenant des aiguilles ou lames fonctionnant différemment (voir par exemple EP-A-0 657 094, EP-A-0 323 674).

Par le document EP-A-0 323 674, on connaît par ailleurs un système de tri de plants en mottes suivant lequel une plaque à alvéoles contenant des plants en mottes est découpée en bandes longitudinales comprenant chacune une rangée d'alvéoles contenant des plants en mottes. On fait ensuite défiler ces bandes, avec les plants en mottes qu'elles contiennent, une à une devant une barrière photo-électrique susceptible de distinguer entre des plants de taille correcte et des plants trop petits. Un dispositif d'extraction commandé par la barrière photo-électrique extrait les plants trop petits de la bande, chaque plant extrait étant remplacé, à l'aide d'une tête de préhension et de transfert, par un plant de taille correcte lui-même extrait par ladite tête d'une autre bande servant de bande de réserve qui défile devant une autre barrière photo-électrique en vue de la sélection des plants de taille correcte dans cette autre bande. Il s'agit là d'une installation de tri compliquée qui ne peut fonctionner qu'avec des plaques à alvéoles de type particulier susceptibles d'être coupées en bandes. Compte tenu du mode de fonctionnement, le débit de l'installation est limitée. Enfin, cette installation telle que décrite n'effectue qu'un tri et ne permet pas une transplantation, consistant par exemple à extraire les plants de plaques de semis à alvéoles petites et rapprochées, pour les repiquer, éventuellement après triage, dans des plaques de croissance à alvéoles plus grandes et plus espacées.

Un autre inconvénient des installations de transplantation connues consiste dans le fait que les têtes de préhension et de transfert qui saisissent généralement simultanément tous les plants d'une rangée d'alvéoles d'une plaque, à un poste de préhension, ne sont pas indépendantes les unes des autres, ce qui fait que tous les plants saisis simultanément par ces têtes de préhension sont repiqués simultanément en une rangée à un poste de réception, généralement avec des intervalles accrus entre les plants de la rangée. Il est donc nécessaire de disposer, au poste de réception, pour recevoir les plants retirés d'une rangée d'alvéoles au poste de préhension, d'un nombre correspondant d'alvéoles disposées en une rangée. Or, il serait désirable de pouvoir repiquer les plants, au poste de réception, en des rangées recevant chacune un nombre de plants différent et en particulier plus faible que le nombre des plants saisis simultanément en une rangée au poste de préhension et, d'une manière générale, de pouvoir rendre la plantation, au poste de réception, indépendant de la préhension au poste de préhension.

La présente invention vise une installation de transplantation de plants en mottes permettant de s'affranchir des limitations ou restrictions des procédés et des installations connues.

L'invention vise en particulier une installation de transplantation permettant de procéder, à un poste de réception, à une plantation des plants qui soit indépendante de la préhension des plants au poste de préhension, tant en ce qui concerne le nombre des plants saisis et plantés aux deux postes que les intervalles entre les plants lors de la préhension et lors de la plantation.

La présente invention vise par ailleurs une installation permettant de combiner la transplantation avec un tri des plants de manière que seuls des plants sélectionnés soient transplantés au poste de réception.

L'invention vise également une installation de transplantation qui, tout en étant de structure simple, permet un débit de transplantation élevé.

Un procédé de transplantation de plants en mottes consiste à saisir des plants en mottes à un poste de préhension, à l'aide de têtes de préhension, à transférer les plants à l'aide des têtes de préhension à au moins un poste de réception, et à replanter les plants au poste de réception à l'aide des têtes de préhension. Selon le procédé on saisit au poste de préhension, à l'aide d'une pluralité de têtes de préhension dissociées, simultanément une pluralité de plants en mottes disposés suivant un premier réseau. On soumet les plants saisis, entre le poste de préhension et le poste de réception, avec les têtes de préhension, à un transfert individuel. Au poste de réception, on replante, à l'aide des têtes de préhension, simultanément une pluralité de plants suivant un second réseau.

Il est possible, en vue d'un tri des plants, de transférer sélectivement les plants à l'aide des têtes de préhension entre le poste de préhension et le poste de réception.

Suivant un mode de réalisation, on soumet les plants en mottes à un tri soit au poste de préhension, soit pendant le transfert un à un, et on replante au poste de réception uniquement les plants sélectionnés lors du tri.

Il est possible de replanter les plants au poste de réception suivant un second réseau qui peut être identique au premier réseau, ou peut être différent du premier réseau des plants au poste de préhension, c'est-à-dire un second réseau pouvant présenter, par rapport au premier réseau, des intervalles différents entre les plants et/ou un nombre différent de plants par réseau, par exemple par rangée.

Une installation de transplantation de plants en mottes objet de l'invention comprend une pluralité de têtes de préhension pour saisir des plants en mottes à un poste de préhension et pour replanter les plants en mottes à au moins un poste de réception. L'installation comprend, en outre, des moyens de commande des têtes de préhension, pour actionner lesdites têtes pour leur permettre de saisir et de relâcher les mottes. L'installation comprend également des moyens de transfert pour transférer les têtes de préhension entre le poste de préhension et le poste de réception. Selon l'invention, les têtes de préhension sont dissociées les unes des autres et de leurs moyens de commande. Les moyens de transfert sont conçus de manière à transférer les têtes de préhension individuellement, une à une, entre le poste de préhension et le poste de réception. Les moyens de commande des têtes de préhension sont localisés au poste de préhension et au poste de réception.

De préférence, les moyens de transfert comprennent au moins un transporteur à mouvement continu susceptible d'entraîner les têtes de préhension individuellement par frottement et des moyens d'arrêt commandés pour retenir les têtes de préhension sélectivement dans des positions prédéterminée sur le trajet dudit transporteur.

Dans le cadre de l'invention, les moyens de transfert des têtes de préhension peuvent par exemple comprendre un unique transporteur sans fin desservant le poste de préhension et le poste de réception, ce transporteur assurant à la fois le transport aller des têtes de préhension portant les plants du poste de préhension au poste de réception et le transport retour des têtes de préhension vides du poste de réception au poste de préhension.

L'installation conforme à l'invention peut comprendre, en outre, des moyens de tri des plants, en amont du poste de réception, et des moyens pour amener au poste de réception uniquement les plants sélectionnés lors du tri.

Suivant un mode de réalisation, les moyens de tri des plants sont disposés entre le poste de préhension et le poste de réception, pour agir sur les plants pendant le transfert des têtes de préhension une à une par le transporteur à mouvement continu. Dans ce cas, les moyens de transfert comprennent, en outre, au moins un transporteur additionnel qui reprend, en amont du poste de réception, les têtes de préhension portant les plants non sélectionnés par les moyens de tri et les renvoie au poste de préhension sans passer par le poste de réception, de sorte que seules les têtes de préhension portant des plants sélectionnés par les moyens de tri arrivent au poste de réception.

Suivant un mode de réalisation particulièrement simple, les têtes de préhension sont à commande pneumatique et comprennent une monture portant les moyens de préhension des mottes, des moyens d'actionnement des moyens de préhension, des moyens de guidage permettant aux têtes de préhension de coopérer avec le transporteur à mouvement continu, ainsi que des moyens coopérant avec le transporteur additionnel.

Le transporteur à mouvement continu peut comprendre deux transporteurs longitudinaux à bande. Dans ce cas, les moyens de transfert comprennent, en outre, au moins deux transporteurs additionnels transversaux entre lesdits deux transporteurs longitudinaux, aux deux extrémités de ces derniers, correspondant respectivement au poste de préhension et au poste de réception.

En se référant aux dessins schématiques annexés, on va décrire ci-après plus en détail un exemple de réalisation illustratif et non limitatif d'une installation de transplantation conforme à l'invention ;

Sur les dessins :
la figure 1 est une vue en plan très schématique d'une installation de transplantation avec tri ;
la figure 2 est une vue latérale, partiellement en coupe, d'une tête de préhension en position de préhension au-dessus d'un plant en motte ;
la figure 3 représente la tête de préhension selon la figure 2 en position de transfert du plant.

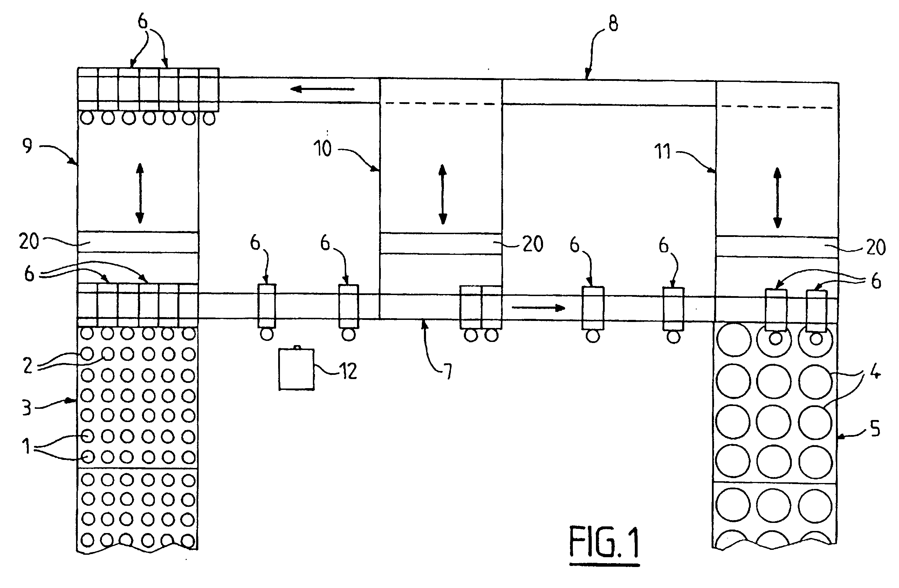

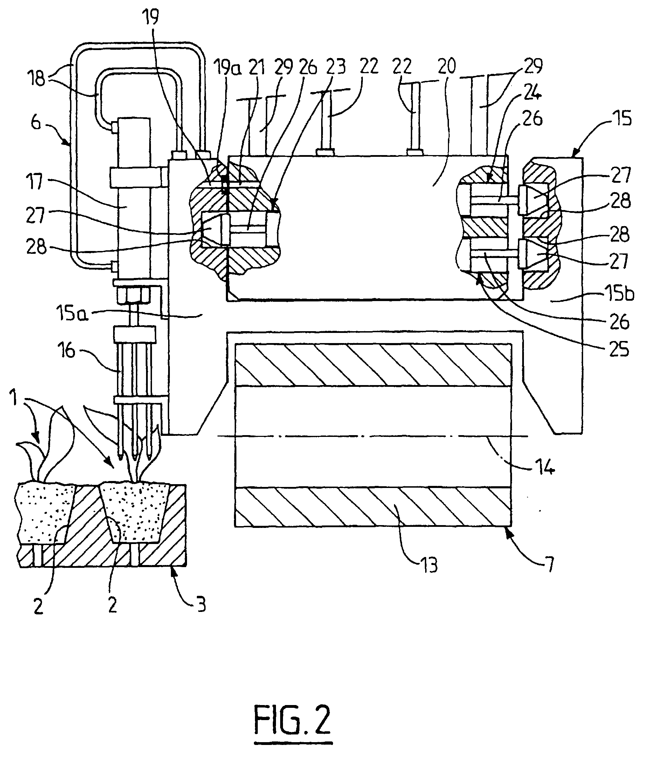

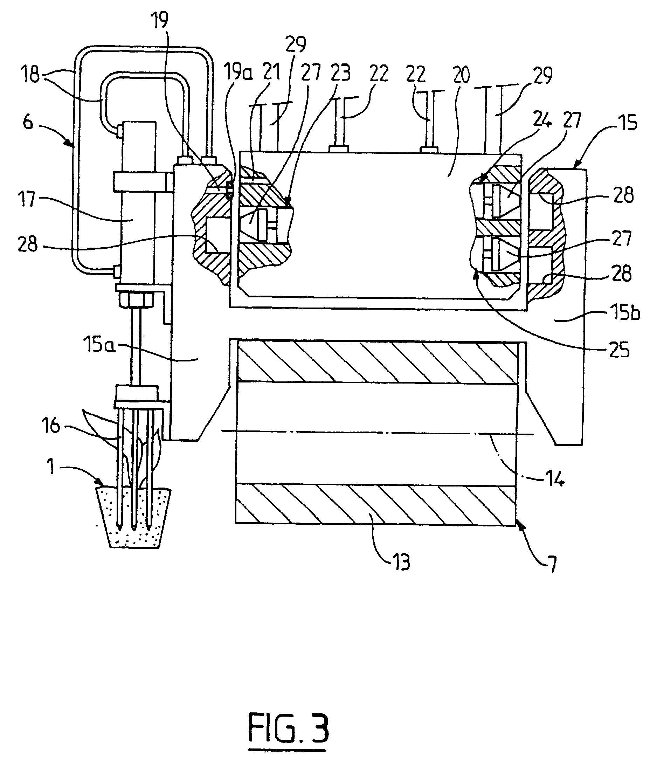

L'installation illustrée schématiquement par la figure 1 sert à la transplantation, avec tri, de plants en mottes 1 (voir figures 2 et 3) contenus dans les alvéoles 2 d'une première plaque 3, dans les alvéoles 4 d'une seconde plaque 5. Dans l'exemple représenté, les alvéoles 2 de la première plaque 3 sont plus petites et plus rapprochées que les alvéoles 4 de la seconde plaque 5. Les plaques 3 et 5 sont ici de même taille, la plaque 3 comportant des rangées de six alvéoles chacune, alors que la plaque 5 comporte des rangées de trois alvéoles chacune.

L'installation comprend une pluralité de têtes de préhension 6, deux transporteurs longitudinaux 7 et 8, et trois transporteurs transversaux 9, 10 et 11 permettant de transférer les têtes de préhension 6 du transporteur longitudinal 7 ou transporteur aller au transporteur longitudinal 8 ou au transporteur retour, et inversement.

Les transporteurs transversaux 9, 10 et 11 comportent, par ailleurs, les moyens de commande des têtes de préhension 6, qui seront décrits ci-après.

Selon la figure 1, un système de tri 12 qui peut être constitué, par exemple, par une barrière photo-électrique ou par une caméra est disposé sur le trajet du transporteur longitudinal aller 7, entre les deux transporteurs transversaux 9 et 10.

Sur la figure 1, les mouvements des transporteurs 7, 8, 9, 10 et 11 sont indiqués par des flèches. On reconnaît que le transporteur 7 se déplace depuis le transporteur transversal 9 vers le transporteur transversal 11, que le transporteur longitudinal 8 se déplace depuis le transporteur transversal 11 vers le transporteur transversal 9, et que les trois transporteurs transversaux 9, 10 et 11 sont déplaçables en va et vient entre les deux transporteurs longitudinaux 7 et 8.

Tel que cela apparaît sur les figures 2 et 3, le transporteur longitudinal 7 (de même que le transporteur longitudinal 8) peut être constitué par un transporteur à courroie ou bande sans fin 13, cette dernière passant sur des rouleaux dont les axes horizontaux sont référencés 14.

Les têtes de préhension 6 comprennent une monture 15 sensiblement en forme de H. La monture porte, sur l'une (15a) de ses branches verticales, un élément de préhension 16 pour un plant en motte 1. Dans l'exemple représenté, l'élément de préhension 16 comprend six aiguilles convergentes (dont trois seulement sont visibles sur les figures 2 et 3), permettant de saisir et de relâcher une motte avec un plant 1 de la manière décrite dans le document WO-A-86/01975, sous l'action d'un vérin pneumatique 17 dont les deux chambres peuvent être alimentées sélectivement en air comprimé par deux conduits 18. Ces conduits 18 se raccordent à deux canaux 19 ménagés dans la partie supérieure de la branche verticale 15a de la monture 15 et débouchant sur la face intérieure de cette branche.

La partie supérieure de la monture 15 en H est destinée à recevoir un bloc de support 20 des transporteurs transversaux 9, 10, 11. Ce bloc de support 20 renferme des groupes de canaux 21 qui, raccordés à des conduits extérieurs 22 d'alimentation en air comprimé, sont destinés à être amenés respectivement en communication avec les canaux 19 d'une monture 15 en vue de l'alimentation du vérin 17 de l'élément de préhension 16 porté par cette monture 15. Un joint d'étanchéit 19a prévu à l'orifice de chaque canal 19 assure l'étanchéité du raccordement entre les canaux 19 et 21.

La fixation amovible de la monture 15 de la tête de préhension 6 au bloc de support 20 s'effectue à l'aide de trois vérins pneumatiques 23, 24, 25 montés à l'intérieur du bloc de support 20, de telle manière que lorsque les trois vérins sont alimentés en air comprimé, la tige de piston 26 de l'un 23 des vérins sorte du bloc 20 sur le côté de ce dernier tourné vers la branche 15a de la monture 15 portant le vérin 17 d'actionnement de l'élément de préhension 16 et que les tiges de piston 26 des deux autres vérins 24 et 25 superposés sortent du bloc 20 sur le côté opposé tourné vers la branche 15b de la monture 15. La tige de piston 26 de chaque vérin 23 à 25 porte à son extrémité libre une tête 27 conique. La branche 15a de la monture 15 portant le vérin 17 présente sur sa face intérieure un trou borgne cylindrique 28 et la branche opposée 15b de la monture 15 présente, sur sa face intérieure, deux trous borgnes cylindriques 28 superposés, le diamètre des trous borgnes 28 étant légèrement supérieur au diamètre maximal des têtes coniques 27.

Le bloc 20 est fixé par des attaches 29 à des moyens non représentés de translation verticale et de translation horizontale du transporteur 9, 10 ou 11 de telle manière que, comme représenté sur la figure 3, le bloc 20, lorsqu'il a été abaissé au-dessus du transporteur 7, en vue de la fixation d'une tête de préhension 6 portée par le transporteur, se trouve engagé dans la partie supérieure de la monture 15 reposant sur le brin supérieur du tapis 13 du transporteur 7, en étant situé à faible distance au-dessus de la barre horizontal du H de la monture 15. Dans cette position, les axes des trous borgnes 28 des branches verticales de la monture 15 sont légèrement décalés vers le bas par rapport aux axes des têtes 27. Lors de l'actionnement des trois vérins 23, 24, 25, les têtes 27, en pénétrant dans les trous 28, provoquent d'abord un soulèvement de la monture 15 du transporteur 7, jusqu'à l'alignement des axes des trous 28 avec les axes des têtes 27. Ce n'est que lorsque les têtes 27 portent contre les fonds des trous borgnes 28, et donc après alignement des canaux 19 dans la monture 15 avec les canaux 21 dans le bloc 20, que la force d'appui des têtes 27 des deux vérins 24 et 25 se trouvant du même côté l'emporte sur la force d'appui de l'unique vérin 23 se trouvant du côté opposé et que le bloc 20 se trouve ainsi déplacé contre la branche 15a de la monture 15 portant le vérin d'actionnement 17 de l'élément de préhension 16, ce qui établit la communication entre les canaux 19 et 21, au droit du joint 19a.

Le bloc 20 de chaque transporteur transversal 9, 10, 11 est en réalité un bloc multiple, ou se compose de plusieurs blocs unitaires juxtaposés. Sur les transporteurs transversaux 9 et 10, le nombre et le pas de ces blocs unitaires correspond au nombre et au pas des alvéoles 2 de la plaque 3. Sur le transporteur transversal 11, le nombre et le pas des blocs unitaires correspondent au nombre et au pas des alvéoles 4 de la plaque 5.

De préférence, et en particulier pour le transporteur 10, il est avantageux de pouvoir commander sélectivement les différents blocs unitaires 20.

Il convient encore de remarquer que, bien que cela n'apparaisse pas sur la figure 1, des butées à commande sélective sont prévues au moins le long du transporteur longitudinal 7, cela en particulier à la sortie du poste de préhension défini par le transporteur transversal 9, à la sortie du poste de transfert défini par le transporteur transversal 10 ainsi qu'au poste de réception défini par le transporteur transversal 11. Le but de ces butées est de bloquer sélectivement les têtes de préhension 6 au poste de préhension, jusqu'à la fin d'un cycle de préhension, de bloquer au poste de transfert, sous la commande du dispositif du tri 12, les têtes de préhension 6 portant des plants non sélectionnés au tri, et de maintenir au poste de réception, jusqu'à leur transfert par le transporteur transversal 10, les têtes de préhension 6 respectivement en position au-dessus des alvéoles 4 de la plaque 5, jusqu'à la fin du cycle de plantation dans ces alvéoles.

D'autres butées à commande sélective peuvent être prévues sur le transporteur longitudinal retour 8, par exemple au niveau du transporteur transversal 10 pour éviter toute interférence entre les têtes de préhension 6 arrivant par l'un et par l'autre des transporteurs 8 et 10.

On va décrire ci-après le procédé de transplantation avec tri mis en oeuvre sur l'installation selon la figure 1, en partant d'une situation dans laquelle toutes les têtes de préhension 6 se trouvent sur le transporteur de retour 8.

Les transporteurs 7 et 8 étant en marche, on déplace le bloc de fixation 20 du transporteur 9 au-dessus du transporteur 8 pour saisir ici six têtes de préhension 6 vides qu'on amène à l'aide du transporteur 9 au-dessus du transporteur 7, de sorte que les éléments de préhension 16 de ces six têtes se trouvent au-dessus des plants 1 d'une rangée d'alvéoles 2 de la plaque 3, dans la position selon la figure 2. Par commande des vérins 17 des têtes 6, on enfonce les éléments de préhension 16 des six têtes dans les six mottes à plants 1 sous-jacentes. On abaisse ensuite la plaque 3 de manière que les plants 1 saisis soient retirés de leurs alvéoles 2.

On coupe alors l'alimentation des vérins 23 à 25, de sorte que le bloc 20 libère les têtes de préhension 6 qui viennent se poser par leurs montures 15 sur le tapis 13 du transporteur 7 et sont acheminées par ce dernier, les unes derrière les autres, le cas échéant en étant espacées les unes des autres, devant le dispositif de tri 12.

Le dispositif 12 commande, en fonction du résultat du tri, la butée prévue sur le transporteur 7 au niveau du transporteur transversal 10, pour laisser passer la ou les têtes de préhension 6 portant des plants sélectionnés et retenir par contre les têtes de préhension 6 portant les plants non sélectionnés. Ces dernieres têtes sont reprises par le bloc 20 du transporteur transversal 10, sont commandées pour être libérés des mottes qu'elles portent, et sont transférées par le bloc 20 du transporteur 10 vers le transporteur retour 8, qui les ramène au niveau du transporteur transversal 9.

Les têtes de préhension 6 portant les plants 1 sélectionnés par le dispositif de tri 12 parviennent, sur le transporteur 7, au poste de réception, au-dessus de la plaque 5, et sont ici arrêtées par des butées commandées dans des positions correspondant respectivement aux alvéoles 4 d'une rangée de la plaque 5 sous-jacente.

Dès que le nombre requis des têtes de préhension 6 se trouvent dans cette position, en l'occurence trois têtes dans l'exemple selon la figure 1, le bloc de fixation 20 du transporteur 11 est emboîté dans les montures 15 de ces têtes 6 (voir figure 3), et les vérins 23, 24 et 25 correspondants de ce bloc 20 sont actionnés, de manière à rendre les montures 15 des têtes 6 solidaires du bloc 20 (position selon la figure 2). La plaque 5 est alors soulevée de manière que les plants en mottes 1 portés par les têtes 6 soient enfoncés dans les alvéoles 4, et les vérins 17 des têtes 6 sont ensuite actionnés de manière que les éléments de préhension 16 soient retirés vers le haut, les plants 1 étant ainsi lâchés par les têtes 6. Le bloc 20 du transporteur 11 amène ensuite les têtes de préhension 6 sur le transporteur longitudinal 8 qui les renvoie vers le transporteur transversal 9 au poste de préhension.

La commande de l'installation quant à la synchronisation correcte des différents mouvements peut se faire par exemple par un automate ou de préférence par une commande à microprocesseur, c'est-à-dire des commandes de type connu en soi, usuelles dans le domaine de l'automatisation.

Bien que l'invention ait été décrite ci-dessus dans son application à la transplantation avec tri, elle concerne également la transplantation sans tri, en particulier la transplantation de plaques à alvéoles plus petites et rapprochées dans des plaques ou autres récipients analogues à alvéoles plus grandes et plus espacées. Dans ce cas, le transporteur transversal 10 serait superflu.

Par ailleurs, au lieu d'utiliser un transporteur longitudinal aller 7 et un transporteur longitudinal retour 8, il serait également possible d'utiliser, par exemple, un unique transporteur se déplaçant en circuit fermé.

D'autres variantes sont également possibles, dans le cadre de l'invention, en ce qui concerne par exemple les éléments de préhension 16 qui, au lieu de comprendre plusieurs aiguilles ou lames convergentes, actionnées suivant leurs axes, pourraient également comprendre par exemple plusieurs éléments formant pinces, par exemple selon les documents EP-A-0 288 873 et EP-A-0 764 503. Dans le cas de pinces à serrage par dépression et à desserrage par élasticité suivant ce dernier document, il serait nécessaire, pour tenir le plant en motte par la pince pendant le transfert de cette dernière, de prévoir sur la pince un clapet anti-retour pour maintenir la pince fermée par dépression, ce clapet étant actionné, c'est-à-dire ouvert, par le bloc de fixation 20 des transporteurs transversaux.

Par ailleurs, au lieu d'effectuer un tri seulement entre des plants non corrects (ou absence de plants) et des plants corrects, il serait possible de procéder à un tri plus sélectif, par exemple pour éliminer les mottes ne portant pas de plants ou portant des plants trop petits, et pour répartir les mottes restantes en deux groupes comprenant l'un des plants relativement petits et l'autre des plants plus grands, à replanter dans des plaques différentes.

Dans ce cas, il y aurait lieu d'ajouter un transporteur transversal à l'installation, entre les transporteurs 10 et 11.

De plus, il serait possible, dans le cadre de l'invention, de remplacer les moyens de commande et de transfert pneumatiques par des moyens mécaniques.

## Revendications

1. Installation de transplantation de plants en mottes (1), comprenant
- un poste de préhension de plants auquel les plants à saisir sont disposés suivant un premier réseau,
- au moins un poste de réception de plants auquel des plants saisis au poste de préhension doivent être replantés suivant un second réseau,
- une pluralité de têtes de préhension (6) comprenant chacune des moyens de préhension (16) pouvant être actionnés pour saisir et relâcher un plant en motte,
- des moyens de transfert (7, 8) pour transférer les têtes de préhension (6) entre le poste de préhension et le poste de réception, et
- des moyens d'actionnement (20) pour actionner les moyens de préhension (16) pour permettre aux têtes de préhension de saisir les plants au poste de préhension et de relâcher des plants au poste de réception,
**caractérisée par le fait que** les moyens de transfert comprennent au moins un transporteur (7,8) à mouvement continu desservant le poste de préhension et le poste de réception, que les têtes de préhension (6) sont conformées de manière à pouvoir être transférées par le transporteur (7, 8) une à une, indépendamment les unes des autres et des moyens d'actionnement (20), que des moyens de butée à commande sélective sont associés en position fixe au transporteur (7, 8) au poste de préhension et au poste de réception pour arrêter sélectivement au poste de préhension et au poste de réception les têtes de préhension (6) transférées par le transporteur (7, 8), et que les moyens de d'actionnement (20) sont installés, dans des positions fixes correspondant à celles des moyens de butée, au poste de préhension et au poste de réception pour coopérer avec les têtes de préhension arrêtées par les moyens de butée à ces postes et pour actionner ces têtes pour leur permettre de saisir les plants au poste de préhension et de relâcher les plants au poste de réception.

2. Installation suivant la revendication 1, **caractérisée par le fait qu'**elle comprend, en outre, des moyens (12) de tri des plants, en amont du poste de réception, et des moyens pour amener au poste de réception uniquement les plants sélectionnés lors du tri.

3. Installation suivant la revendication 2, **caractérisée par le fait que** les moyens de tri sont situés au poste de préhension.

4. Installation suivant la revendication 2, **caractérisé par le fait que** les moyens de tri (12) sont disposés entre le poste de préhension et le poste de réception pour effectuer un tri des plants pendant le transfert un à un des têtes de préhension (6) par le transporteur (7, 8) à mouvement continu et que les moyens de transfert comprennent, en outre, au moins un transporteur additionnel (10) qui reprend les têtes de préhension portant des plants non sélectionnés par les moyens de tri et les renvoie au poste de préhension sans passer par le poste de réception, de sorte que seules les têtes de préhension portant des plants sélectionnés arrivent au poste de réception.

5. Installation suivant la revendication 4, **caractérisé par le fait que** les moyens de transfert comprennent un transporteur longitudinal (7) aller, un transporteur longitudinal (8) retour, deux transporteurs transversaux (9, 11) reliant les deux transporteurs longitudinaux à leurs deux extrémités, au poste de préhension et au poste de réception, et un transporteur transversal (10) additionnel en position intermédiaire.

6. Installation suivant la revendication 5, **caractérisée par le fait que** chaque transporteur transversal (9, 10, 11) comprend un bloc de support (20) pourvu de moyens pour la fixation des têtes de préhension et pour l'actionnement de ces dernières.

7. Installation suivant la revendication 6, **caractérisée par le fait que** le bloc de support (20) de chaque transporteur transversal (9, 10, 11) est un bloc multiple à plusieurs emplacements juxtaposés.

8. Installation suivant la revendication 6, **caractérisée par le fait que** le bloc de support (20) de chaque transporteur transversal se compose de plusieurs blocs unitaires juxtaposés.

9. Installation suivant la revendication 7 ou 8, **caractérisée par le fait que** le nombre et le pas des emplacements du ou des blocs du transporteur transversal (11) au poste de réception sont différents du nombre et du pas des emplacements du ou des blocs du transporteur transversal (9) au poste de préhension.

## Patentansprüche

1. Anlage zum Verpflanzen von Pflanzenballen (1), umfassend
- eine Station zum Ergreifen der Pflanzen, an der die zu erfassenden Pflanzen entlang eines ersten Rasters angeordnet sind,
- mindestens eine Station zur Aufnahme der Pflanzen, an der die an der Greifstation erfassten Pflanzen entlang eines zweiten Rasters umgepflanzt werden müssen,
- eine Vielzahl von Greif köpfen (6), die jeweils Greifmittel (16) umfassen, die betätigt werden können, um einen Pflanzenballen zu erfassen und abzulegen,
- Weiterleitungsmittel (7, 8), um die Greifköpfe (6) zwischen der Greifstation und der Aufnahmestation weiterzuleiten, und
- Betätigungsmittel (20), um die Greifmittel (16) derart zu betätigen, dass es den Greifköpfen möglich ist, die Pflanzen an der Greifstation zu erfassen und Pflanzen an der Aufnahmestation abzulegen,
**dadurch gekennzeichnet, dass** die Weiterleitungsmittel mindestens einen Förderer (7, 8) mit kontinuierlicher Bewegung umfassen, der die Greifstation und die Aufnahmestation versorgt, dass die Greifköpfe (6) derart ausgebildet sind, dass sie von dem Förderer (7, 8) einzeln, unabhängig voneinander und von den Betätigungsmitteln (20) weitergeleitet werden können, dass Anschlagmittel mit selektiver Steuerung in feststehender Position mit dem Förderer (7, 8) an der Greifstation und der Aufnahmestation'verbunden sind, um selektiv an der Greifstation und der Aufnahmestation die von dem Förderer (7, 8) weitergeleiteten Greif köpfe (6) anzuhalten, und dass die Betätigungsmittel (20) in feststehenden Positionen, die jenen der Anschlagmittel entsprechen, an der Greifstation und der Aufnahmestation angebracht sind, um mit den von den Anschlagmitteln an diesen Stationen angehaltenen Greifköpfen zusammenzuwirken und diese Köpfe derart zu betätigen, dass es ihnen möglich ist, die Pflanzen an der Greifstation zu erfassen und die Pflanzen an der Aufnahmestation abzulegen.

2. Anlage nach Anspruch 1, **dadurch gekennzeichnet, dass** sie ferner Mittel (12) zum Sortieren der Pflanzen stromaufwärts zu der Aufnahmestation umfasst und Mittel, um zu der Aufnahmestation nur die beim Sortiervorgang ausgewählten Pflanzen weiterzuleiten.

3. Anlage nach Anspruch 2, **dadurch gekennzeichnet, dass** die Sortiermittel an der Greifstation angeordnet sind.

4. Anlage nach Anspruch 2, **dadurch gekennzeichnet, dass** die Sortiermittel (12) zwischen der Greifstation und der Aufnahmestation angeordnet sind, um eine Sortierung der Pflanzen während der Weiterleitung der einzelnen Greifköpfe (6) durch den Förderer (7, 8) mit kontinuierlicher Bewegung durchzuführen, und dass die Weiterleitungsmittel ferner mindestens einen zusätzlichen Förderer (10) umfassen, der die Greifköpfe aufnimmt, die nicht von den Sortiermitteln ausgewählte Pflanzen tragen, und sie zu der Greifstation zurückführt, ohne über die Aufnahmestation zu laufen, so dass nur die Greifköpfe, die ausgewählte Pflanzen tragen, an der Aufnahmestation ankommen.

5. Anlage nach Anspruch 4, **dadurch gekennzeichnet, dass** die Weiterleitungsmittel einen Längshinförderer (7), einen Längsrückförderer (8), zwei Querförderer (9, 11), die die beiden Längsförderer an ihren beiden Enden verbinden, an der Greifstation und an der Aufnahmestation und einen zusätzlichen Querförderer (10) in der Zwischenposition umfassen.

6. Anlage nach Anspruch 5, **dadurch gekennzeichnet, dass** jeder Querförderer (9, 10, 11) einen Stützblock (20) umfasst, der mit Mitteln zur Befestigung der Greifköpfe und zur Betätigung dieser letztgenannten versehen ist.

7. Anlage nach Anspruch 6, **dadurch gekennzeichnet, dass** der Stützblock (20) jedes Querförderers (9, 10, 11) ein Mehrfachblock mit mehreren nebeneinander liegenden Standorten ist.

8. Anlage nach Anspruch 6, **dadurch gekennzeichnet, dass** der Stützblock (20) jedes Querförderers aus mehreren nebeneinander liegenden Einzelblöcken besteht.

9. Anlage nach Anspruch 7 oder 8, **dadurch gekennzeichnet, dass** die Anzahl und der Abstand der Standorte des Blocks oder der Blöcke des Querförderers (11) an der Aufnahmestation anders als die Anzahl und der Abstand der Standorte des Blocks oder der Blöcke des Querförderers (9) an der Greifstation sind.

## Claims

1. Device for transplanting plants in soil blocks (1), comprising:
- a plant picking-up station at which the plants to be grasped are arranged in a first grid pattern,
- at least one plant-receiving station at which plants grasped at the picking-up station need to be replanted in a second grid pattern,
- a plurality of picking-up heads (6) each comprising picking-up means (16) that can be actuated to grasp and release a plant in a soil block,
- transfer means (7, 8) for transferring the picking-up heads (6) between the picking-up station and the receiving station, and
- actuating means (20) for actuating the picking-up means (16) to allow the picking-up heads to grasp the plants at the picking-up station and release the plants at the receiving station,
**characterized in that** the transfer means comprise at least one continuous-movement conveyor (7, 8) serving the picking-up station and the receiving station, **in that** the picking-up heads (6) are shaped in such a way as to be able to be transferred by the conveyor (7, 8), one by one, independently of one another and of the actuating means (20), **in that** selectively operated stock means are associated in a fixed position with the conveyor (7, 8) at the picking-up station and at the receiving station to selectively stop the picking-up heads (6) transferred by the conveyor (7, 8) at the picking-up station and at the receiving station, and **in that** the actuating means (20) are installed, in fixed positions corresponding to those of the stop means, at the picking-up station and at the receiving station to collaborate with the picking-up heads stopped by the stop means at these stations and to actuate these heads to allow them to grasp the plants at the picking-up station and to release the plants at the receiving station.

2. Device according to Claim 1, **characterized in that** it further comprises plant-sorting means (12) upstream of the receiving station, and means for conveying to the receiving station only the plants selected during the sort.

3. Device according to Claim 2, **characterized in that** the sorting means are situated at the picking-up station.

4. Device according to Claim 2, **characterized in that** the sorting means (12) are arranged between the picking-up station and the receiving station so as to sort the plants while the picking-up heads (6) are being transferred one by one by the continuous-movement conveyor (7, 8), and **in that** the transfer means further comprise at least one additional conveyor (10) which takes charge of the picking-up heads carrying plants not selected by the sorting means and sends them back to the picking-up station without passing via the receiving station so that only the picking-up heads carrying selected plants reach the receiving station.

5. Device according to Claim 4, **characterized in that** the transfer means comprise an outbound longitudinal conveyor (7), a return longitudinal conveyor (8), two transverse conveyors (9, 11) connecting the two longitudinal conveyors at their two ends, at the picking-up station and at the receiving station, and an additional transverse conveyor (10) at an intermediate position.

6. Device according to Claim 5, **characterized in that** each transverse conveyor (9, 10, 11) comprises a support unit (20) provided with means for fixing the picking-up heads and actuating the latter.

7. Device according to Claim 6, **characterized in that** the support unit (20) for each transverse conveyor (9, 10, 11) is a multiple unit with several juxtaposed locations.

8. Device according to Claim 6, **characterized in that** the support unit (20) for each transverse conveyor is made up of several juxtaposed individual units.

9. Device according to Claim 7 or 8, **characterized in that** the number and spacing of the locations of the unit or units of the transverse conveyor (11) at the receiving station differ from the number and spacing of the locations of the unit or units of the transverse conveyor (9) at the picking-up station.
